# NOUVEAU FASCICULE DE BREVET EUROPEEN

(11) **EP 0 534 815 B2**
(45) Date de publication et mention de la décision concernant l'opposition: **03.05.2000**
(45) Mention de la délivrance du brevet: 02.11.1995
(21) Numéro de dépôt: 92402458.1
(22) Date de dépôt: 09.09.1992
(51) Int. Cl.: F02K 1/56, F02K 1/60, F02K 1/70

(54) **Inverseur de poussée de turboréacteur à pilotage amélioré des nappes du flux inversé**
Schubumkehrvorrichtung mit verbesserter Umlenkung der Gasstrahlen
Thrust-reverser with improved guidance of the reversed jets

(30) Priorité: 11.09.1991 FR 9111192
(43) Date de publication de la demande: 31.03.1993
(73) Titulaire: HISPANO-SUIZA, 92213 Saint Cloud (FR)
(72) Inventeur: Carimali, Félix, F-76600 Le Havre (FR); Legras, Michel Jean Lucien, F-76600 Le Havre (FR)
(74) Mandataire: Berrou, Paul

(56) Documents cités:
- FR-A- 1 267 850
- FR-A- 1 286 178
- FR-A- 1 403 761
- FR-A- 1 529 361
- FR-A- 2 348 371
- GB-A- 1 002 709
- US-A- 2 968 150
- US-A- 3 640 468
- US-A- 3 893 626

## Description

La présente invention concerne un inverseur de poussée de turboréacteur. Un premier exemple d'application concerne les turboréacteurs à double flux.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

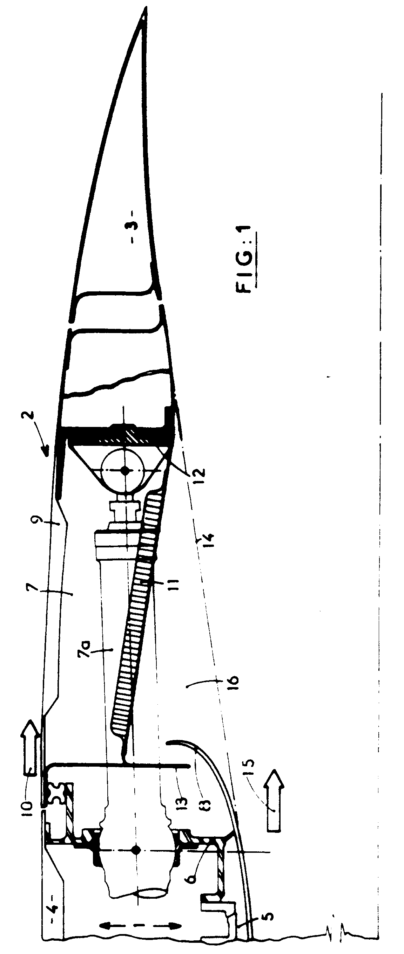

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau interne 5 limitant extérieurement la veine du flux secondaire et un cadre avant 6 qui assure la jonction desdits panneaux 4 et 5. Ledit cadre avant 6 sert également de support au dispositif de commande des déplacements de la partie mobile 2 qui est essentiellement composée d'un certain nombre d'éléments déplaçables, ou obstacles communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion.

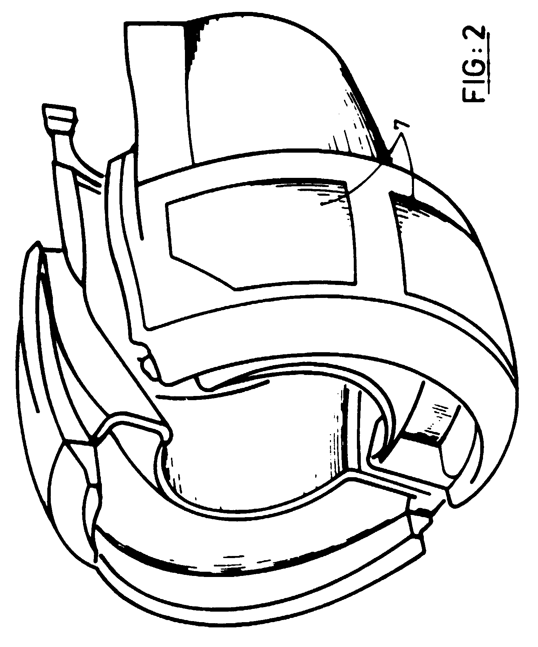

La figure 2 montre, selon une vue schématique en perspective un exemple d'application d'un tel inverseur de poussée à un turboréacteur à double flux, l'inverseur comportant dans ce cas quatre portes 7 et la figure 2 montrant lesdites portes 7, fermées , correspondant à un fonctionnement en poussée directe. Chaque porte 7 est associée à un moyen de commande des déplacements tels qu'un vérin 7a.

En aval de la partie fixe 1, amont et aval étant définis par rapport au sens normal de circulation des gaz en poussée directe, la structure est prolongée par un bord de déviation 8, fixé sous le cadre avant 6 et destiné à assurer une orientation adéquate de l'écoulement, en position d'inversion de poussée. Chaque porte 7 est composée d'un panneau externe 9 venant se placer en position jet direct dans le prolongement du panneau externe 4 de la partie fixe amont 1 pour constituer la paroi aérodynamique continue limitant le flux extérieur au moteur représenté par la flèche 10, d'un élément interne 11 et d'une structure intérieure formée de raidisseurs 12, assurant la liaison entre le panneau 9 et l'élément 11. La porte 7 est complétée par un ensemble de déflecteurs destinés à canaliser l'écoulement inversé lorsque l'inverseur se trouve en position d'inversion de poussée et la porte 7 en position ouverte ou déployée. Cet ensemble comporte notamment en amont de la porte 7 un becquet 13 constitué d'une partie frontale associée ou non à des parties latérales. Afin que la porte 7, en position ouverte d'inversion de poussée, assure des performances suffisantes, il est habituellement nécessaire, comme dans l'exemple connu représenté à la figure 1, que la partie avant du panneau interne 11 s'écarte, dans une direction radiale extérieure, d'une surface théorique représentée par la ligne 14, correspondant à une enveloppe théorique de délimitation aérodynamique continue parfaite de la veine du flux secondaire des gaz, représenté par la flèche 15. Une cavité 16 se trouve ainsi formée du côté intérieur de la porte 7 lorsqu'elle se trouve en position fermée correspondant à la poussée directe, délimitée, à l'avant, par le becquet 13 de porte et par le bord de déviation 8 de la partie fixe amont 1, du côté externe, par la partie avant de l'élément interne 11 de porte et du côté radialement interne, par ladite surface théorique 14. Une partie du flux est forcée par le bord de déviation 8 dans ladite cavité 16, créant ainsi une distorsion du flux et des perturbations dans les écoulements. Il en résulte des pertes aérodynamiques qui sont néfastes au fonctionnement en poussée directe.

D'autres exemples de réalisation du type d'inverseur de poussée de turboréacteur à portes basculantes sont décrits notamment par FR-A 2 486 153, FR-A 2 506 843 et FR-A 2 559 838. Des solutions ont également été proposées pour une amélioration du profil de veine correspondant à une enveloppe aérodynamique de veine correcte en fonctionnement de poussée directe.

Notamment, FR-A 2 621 082 définit une porte d'inverseur comportant au moins dans sa partie amont un panneau mobile s'adaptant au profil de veine lors du fonctionnement en poussée directe, masquant ainsi ladite cavité 16, tout en s'escamotant lors du fonctionnement en inversion de poussée pour obtenir les performances requises.

Un autre problème concerne le côntrole du jet inversé lors du fonctionnement en inversion de poussée. FR-A 2559 838 cité ci-dessus a notamment recherché une solution dans divers aménagements apportés à la forme des bords du puits d'inversion dégagé dans le capotage lors de l'ouverture des portes de l'inverseur. On connaît également l'utilisation dans ce but d'un ensemble de déflecteurs associés à chaque porte, tel que le déflecteur frontal 13 représenté sur la figure 1. Toutefois dans certaines applications, ces ménagements antérieurement connus peuvent se révéler insuffisants pour assurer les performances requises.

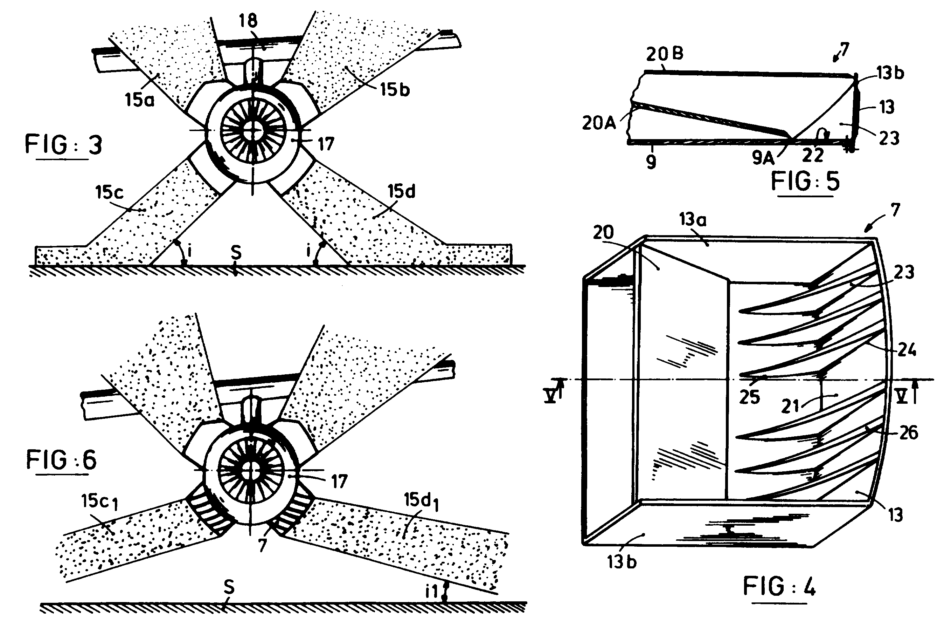

En outre, diverses interférences ont pu être constatées, notamment dans certains cas le jet inversé en position basse rencontre la surface du sol sous une incidence forte, ce qui peut présenter des inconvénients dans certaines phases d'approche de l'avion. La figure 3 jointe en annexe schématise une telle configuration montrant un turboréacteur 17 monté sous l'aile 18 d'un avion, les portes 7 de l'inverseur de poussée étant ouvertes pour laisser le passage à un flux inversé, respectivement 15a et 15b en partie haute et 15c et 15d en partie basse. Les flux 15c et 15d viennent heurter le sol S sous une incidence i relativement élevée.

Le but de l'invention est d'apporter une solution à ces divers problèmes sans encourir les inconvénients relevés ci-dessus des solutions connues et tout en tenant compte des impératifs liés à l'application visée aux moteurs aéronautiques et notamment ceux de masse et d'encombrement minimaux.
Ces buts sont atteints, conformément à l'invention, par un inverseur de poussée à portes pivotantes du type précité caractérisé en ce que des éléments en forme d'aubages sont disposés à l'intérieur de chaque porte du côté amont, régulièrement répartis sur la largeur le ladite porte et disposés suivant une orientation générale parallèle à l'axe longitudinal géométrique de l'inverseur de manière à former des cloisons déflectrices assurant un pilotage des nappes du flux inversé lesdits éléments en aubages ayant une forme générale triangulaire et ayant un côté fixé sur la paroi interne du becquet frontal et un autre côté fixé sur la paroi interne du panneau externe de porte, en outre, lesdits éléments en aubages ayant un sommet situé à l'extrémité libre dudit becquet Frontal et un autre sommet placé sur la ligne de contact du panneau mobile de porte sur le panneau externe de porte en position d'inversion. D'autres caractéristiques et avantages de l'invention seront mieux compris à la lecture de la description qui va suivre d'un mode de réalisation de l'invention, en référence aux dessins annexés surlesquels :
- la figure 1 représente une demi-vue schématique en coupe longitudinale par un plan passant par l'axe de rotation d'un turboréacteur associé, d'un inverseur de poussée à portes pivotantes, en position fermées, d'un type connu et qui a fait précédemment l'objet d'une description ;
- la figure 2 représente une vue schématique d'une perspective d'un inverseur de poussée du type précité montré en position monté et avec les portes fermées ;
- la figure 3 qui a été précédemment décrite représents une vue schématique des écoulements en jet inversé ;
- la figure 4 représente, selon une vue partielle en perspective, l'extrémité amont d'une porte d'inverseur de poussée, selon un mode de réalisation de l'invention ;
- la figure 5 représente une vue en section selon VV de la porte d'inverseur représentée sur la figure 4 ;
- la figure 6 représente une vue schématique des écoulements en jet inversé dans le cas d'un inverseur équipé de portes telles que représentées sur les figures 4 et 5;
L'inverseur de poussée conforme à un mode de réalisation de l'invention, monté sur un turboréacteur 17 et dont le mode de fonctionnement est schématisé sur la figure 6 comporte, de manière connue, les ensembles et pièces qui ont été précédemment décrits en référence à l'exemple connu de réalisation représenté sur la figure 1 et notamment une partie mobile constituée, dans l'exemple représenté, des portes 7 sur l'aménagement desquelles porte plus directement la présente invention.
Comme schématisé sur les figures 4 et 5, une porte 7 d'inverseur de poussée comporte tout d'abord des éléments déjà connus et utilisés, à savoir un panneau externe 9 et un becquet frontal fixe 13 qui, dans l'exemple représenté, se prolonge également sur les côtés de la porte 7 par des rebords 13a et 13b.
Comme connu notamment par FR-A 2 621 082, précédemment mentionné, la porte 7 comporte également, au moins dans sa partie amont, un panneau mobile 20 dont la double fonction, en position 20B correspondant à la porte 7 fermée dans un fonctionnement en poussée directe, de reconstitution d'une paroi aérodynamique au profil de veine et, en position 20A correspondant à la porte 7 ouverte dans un fonctionnement en inversion de poussée, de guidage du flux inversé a été explicité dans ce document. On s'y reportera également pour la description des moyens de liaison ménagés entre ledit panneau mobile 20 et la porte 7 ainsi que des moyens de commande des déplacements dudit panneau mobile 20 entre les deux positions 20A d'inversion de flux et 20B de poussée directe indiquées schématiquement sur la figure 5, les déplacements de la porte 7 restant, comme il est connu, commandés par un vérin 7a, comme cela a été précédemment décrit en référence à la figure 1.

Dans le but recherché cependant d'améliorer le pilotage des nappes du flux inversé et conformément à l'invention, quelques modifications sont apportées à la porte 7 d'inverseur, notamment à sa partie amont, comme représenté sur les figures 4 et 5. En effet, dans un espace amont intérieur à la porte 7, délimité par la paroi interne 21 du becquet frontal 13, par la partie d'extrémité 22 de la paroi interne du panneau externe 9 de porte et par une surface définie entre la ligne de contact 9A du panneau mobile 20A en position escamotée sur la paroi interne du panneau externe 9 de porte et le rebord 13B d'extrémité du becquet frontal 13 au contact de l'extrémité du panneau mobile 20B dans la position correspondant à la porte fermée, sont disposés des éléments en forme d'aubages 23.

Chaque élément en aubage 23 a une forme générale triangulaire et est fixé, d'une part, par un côté 24 sur la paroi interne 21 du becquet frontal 13 et, d'autre part, par un autre côté 25 sur la partie d'extrémité 22 de la paroi interne du panneau externe 9 de porte. Le profil du troisième côté 26 est déterminé de manière à éviter toute interférence avec l'extrémité du panneau mobile 20 lors de ses déplacements. Ainsi, un sommet de l'élément en aubage 23 se trouve situé en 9A sur la paroi interne du panneau externe 9 de porte, un autre sommet en 13B, à l'extrémité du becquet frontal 13 et le troisième sommet dans l'angle de raccordement entre la paroi externe 9 de porte et le becquet frontal 13. Par ailleurs, le profil d'aubage de chaque élément 23 est déterminé de manière à assurer les meilleures performances de l'inverseur en fonctionnement d'inversion de jet et notamment de manière à obtenir les caractéristiques recherchées du pilotage des nappes du flux inversé. Ces éléments en aubages 23 constituent ainsi des cloisons déflectrices régulièrement disposées sur la largeur de la porte 7, à son bord amont. La figure 6 montre schématiquement un exemple de l'amélioration des résultats obtenus sur les écoulements en jet inversé. En comparant les schémas des figures 3 et 6, dans un cas où les portes basses 7 de l'inverseur de poussée ont été modifiées et aménagées conformément à l'invention, on constate que les angles d'incidence i l au sol S des flux inversés correspondants 15 dl et 15 Cl ont été significativement réduits, évitant ainsi les inconvénients antérieurs.

## Revendications

1. Inverseur de poussée de turboréacteur à double flux, comportant des portes pivotantes (7) susceptibles, en position fermée, de s'intégrer dans la paroi extérieure du canal annulaire du flux secondaire et, en position ouverte, de dévier le flux secondaire, chaque porte (7) étant constituée au moins d'un panneau externe (9) muni au moins d'un becquet frontal (13) et d'un élément interne (11) doublé au moins dans sa partie amont d'un panneau mobile (20), ledit panneau mobile (20) se plaçant, en position fermée de la porte (7) correspondant à la position de poussée directe de l'inverseur, suivant la surface théorique de délimitation aérodynamique du profil de la veine de circulation du flux secondaire et, en position ouverte de la porte (7) correspondant à la position d'inversion de poussée de l'inverseur, par son extrémité amont contre la face interne du panneau externe (9) de porte, dégageant ainsi l'extrémité amont dudit panneau externe ainsi que ledit becquet frontal (13) caractérisé en ce que des éléments (23) en forme d'aubages sont disposés à l'intérieur de chaque porte (7) du côté amont, régulièrement répartis sur la largeur de ladite porte (7) et disposés suivant une orientation générale parallèle à l'axe longitudinal géométrique de l'inverseur de manière à former des cloisons déflectrices assurant un pilotage des nappes du flux inversé, lesdits éléments en aubages (23) ayant une forme générale triangulaire, et ayant un côté (24) fixé sur la paroi interne (21) dudit becquet frontal (13) et un autre côté (25) fixé sur la paroi interne (22) dudit panneau externe (9) de porte, en outre, lesdits éléments en aubages (23) ayant un sommet situé à l'extrémité (13B) libre dudit becquet frontal (13) et un autre sommet placé sur la ligne de contact (9a) du panneau mobile (20) de porte sur le panneau externe (9) de porte en position d'inversion.

## Claims

1. A thrust reverser of a bypass turbojet engine comprising pivoting doors (7) adapted when in the closed position to be integrated in the outer wall of the annular bypass flow duct and when in the open position to dived the bypass flow, each door (7) consisting of at least one outer panel (9) having at least one front spoiler (13) and of an inner element (11) doubled at least in its upstream part by a movable panel (20) which, with the door (7) in its closed position corresponding to the forward thrust position of the reverser, takes up a position along the theoretical aerodynamic boundary surface of the bypass flow path profile and, with the door (7) in its open position corresponding to the thrust reversal position of the reverser, engages by way of its upstream end with the inside surface of the outer panel (9) of the door and thus leaves free the upstream end of the outer door panel (9) and the front spoiler (13), characterised in that vane-like elements (23) are disposed inside and at the upstream end of each door (7), are distributed evenly over the width thereof and are arranged in a general orientation parallel to the longitudinal geometric axis of the reverser so as to form deflecting baffles for directing the layers of the reversed flow, the vane-like elements (23) having a generally triangular shape and having one side (24) secured to the inner wall (21) of the front spoiler (13) and another side (25) secured to the inner wall (22) of the outer door panel (9), the vane-like elements (23) also having one corner disposed at the free end (13B) of the front spoiler (13) and another corner disposed on the contact line (9a) between the movable door panel (20) and the outer door panel (9) in the thrust reversal position.

## Patentansprüche

1. Schubumkehrvorrichtung für ein Zweikreis-TL-Triebwerk mit Schwenkklappen (7), die sich in geschlossener Stellung in die Außenwand des ringförmigen Kanals des Mantelstroms einfügen können und in geöffneter Stellung den Mantelstrom ableiten können, wobei jede Klappe (7) wenigstens aus einer Außenwand (9), die mit wenigstens einer Stirnplatte (13) versehen ist, und einem inneren Element (11), das wenigstens in seinem stromaufseitigen Abschnitt mit einer beweglichen Wand (20) aufgedoppelt ist, besteht, wobei die bewegliche Wand (20) in geschlossener Stellung der Klappe (7), die der im Direktschub-Stellung der Schubumkehrvorrichtung entspricht, auf der theoretischen aerodynamischen Begrenzungsfläche des Profils der Strömung des Mantelstroms liegt und in offener Stellung der Klappe (7), die der Schubumkehrstellung der Schubumkehrvorrichtung entspricht, mit Ihrem stromaufseitigen Ende an der Innenfläche der Außenwand (9) der Klappe anliegt, so daß dadurch das stromaufseitige Ende der Außenwand sowie der Stirnplatte (13) freigegeben wird,
**dadurch gekennzeichnet,**
**daß** schaufelförmige Elemente (23) im Inneren jeder Klappe (7) stromaufseitig in gleichmäßigen Abständen über die Breite dieser Klappe (7) verteilt angeordnet sind und allgemein parallel zu der geometrischen Längsachse der Schubumkehrvorrichtung ausgerichtet sind, so daß sie Ablenkplatten bilden, die eine Führung der umgekehrten Stromfaden gewährleisten, wobei die schaufelförmigen Elemente (23) allgemein dreieckig sind und mit einer Seite (24) an der Innenwand (21) dieser Stirnplatte (13) befestigt sind und mit einer weiteren Seite (25) an der Innenwand (22) dieser Außenwand (9) der Klappe befestigt sind, wobei die schaufelförmigen Elemente (23) sich ferner mit einer Spitze am freien Ende (13B) dieser Stirnplatte (13) befinden und mit einer anderen Spitze an der Berührungslinie (9a) befinden, die die bewegliche Wand (20) der Klappe in Umkehrstellung mit der Außenwand (9) der Klappe bildet.
